# FASCICULE DE BREVET EUROPEEN

(11) **EP 4 363 080 B1**
(45) Date de publication et mention de la délivrance du brevet: **03.12.2025**
(21) Numéro de dépôt: 22737877.5
(22) Date de dépôt: 27.06.2022
(51) Int. Cl.: B01D 53/14

(54) **COMPOSITION AQUEUSE ABSORBANTE CONTENANT UNE BASE ET UN AZOLE POUR LA SÉPARATION DU DIOXYDE DE CARBONE CONTENU DANS UN EFFLUENT GAZEUX**
ABSORBIERENDE WÄSSRIGE ZUSAMMENSETZUNG MIT EINER BASIS UND EINEM AZOL ZUR ABTRENNUNG VON KOHLENDIOXID AUS EINEM GASFÖRMIGEN ABSTROM
ABSORBENT AQUEOUS COMPOSITION CONTAINING A BASE AND AN AZOLE FOR SEPARATING CARBON DIOXIDE FROM A GASEOUS EFFLUENT

(30) Priorité: 02.07.2021 FR 2107216
(43) Date de publication de la demande: 08.05.2024
(73) Titulaire: IFP Energies nouvelles, 92500 Rueil-Malmaison (FR)
(72) Inventeur: PETAUD, Guillaume, 92852 RUEIL-MALMAISON CEDEX (FR); GIREL, Etienne, 92852 RUEIL-MALMAISON CEDEX (FR)
(74) Mandataire: IFP Energies nouvelles
(86) Numéro de dépôt international: PCT/EP2022/067622
(87) Numéro de publication internationale: WO 2023/274985

(56) Documents cités:
- FR-A1- 2 909 010
- FR-A1- 2 934 175
- FR-A1- 2 934 176
- FR-A1- 2 948 578
- FR-A1- 2 970 423

## Description

### Domaine technique

La présente invention concerne la décarbonatation d'un effluent gazeux, plus particulièrement l'invention concerne une composition aqueuse absorbante pour le captage du CO₂ contenu dans un effluent gazeux.

### Technique antérieure

Le dioxyde de carbone est un des gaz à effet de serre largement produits par différentes activités de l'homme et a un impact direct sur la pollution atmosphérique.

Afin de diminuer les quantités de dioxyde de carbone émises dans l'atmosphère, il est possible de capter le CO₂ contenu dans un effluent gazeux.

La décarbonatation des effluents gazeux tels que par exemple le gaz naturel, les gaz de synthèse, les fumées de combustion, les gaz de raffinerie, les gaz obtenus en queue du procédé Claus, les gaz de fermentation de biomasse, les gaz de cimenterie et les gaz de hauts-fourneaux est généralement réalisée par lavage par une solution absorbante. Les caractéristiques physico-chimiques des solutions employées sont étroitement liées à la nature du gaz à traiter : élimination sélective d'une impureté, spécification attendue sur le gaz traité, stabilité thermique et chimique du solvant vis-à-vis des différents composés présents dans le gaz à traiter.

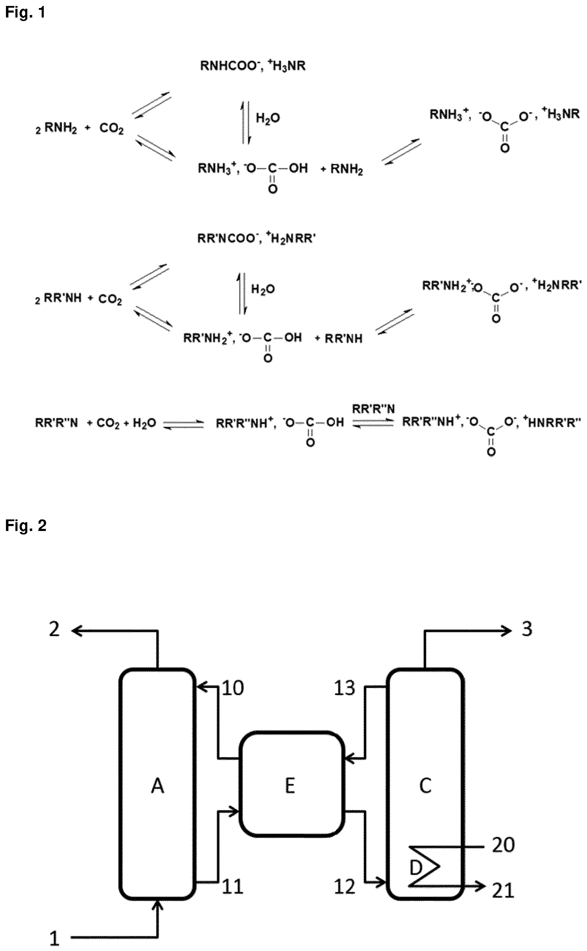

Les solvants couramment utilisés aujourd'hui comprennent notamment des solutions aqueuses d'alcanolamines primaires, secondaires ou tertiaires et éventuellement un co-solvant organique, comme le méthanol par exemple. En effet, le CO₂ absorbé réagit avec l'alcanolamine présente en solution selon une réaction exothermique réversible, bien connue de l'homme du métier et conduisant à la formation de carbamates, d'hydrogénocarbonates ou de carbonates. Ces réactions équilibrées peuvent s'écrire selon les schémas décrits sur la Figure 1 :
Pour une alcanolamine primaire comme par exemple pour la monoéthanolamine, la réaction mise en jeu est la réaction de la figure 1 (en haut) qui fait intervenir les ions carbamate, hydrogénocarbonate et carbonate.

Pour une alcanolamine secondaire comme par exemple pour la diéthanolamine, elle s'écrit selon la figure 1 (au centre).

Et, pour une alcanolamine tertiaire comme par exemple pour la méthyldiéthanolamine, selon la figure 1 (en bas).

Une alternative aux solutions aqueuses d'alcanolamine est l'utilisation de solutions chaudes de carbonates de métaux alcalins. Le principe est basé sur l'absorption du CO₂ dans la solution aqueuse, par un carbonate inorganique selon une réaction conduisant à un hydrogénocarbonate inorganique et sur la régénération par la réaction réversible transformant un hydrogénocarbonate inorganique en carbonate inorganique.

Certains procédés de décarbonatation par lavage avec une solution absorbante telle que le méthanol réfrigéré ou les polyéthylèneglycols, sont basés sur une absorption physique du CO₂. Les demandes de brevet français FR 2 909 010 et FR 2 909 011 décrivent l'utilisation d'une composition absorbante du dioxyde de carbone associant une base particulière choisie respectivement parmi les amidines et guanidines ou parmi les phosphazènes à un composé comprenant au moins une fonction thiol ou alcool et éventuellement à un solvant non aqueux. La demande de brevet français FR 2 934 175 décrit une composition absorbante du dioxyde de carbone, utilisée dans un procédé de captage du dioxyde de carbone contenu dans un effluent gazeux, comprenant en milieu aqueux l'association d'une base particulière choisie parmi les carbonates et/ou les hydrogénocarbonates avec un composé choisi parmi les thiols. Un aspect primordial des opérations de traitement de gaz ou fumées par solvant reste la régénération de l'agent de séparation. En fonction du type d'absorption (physique ou chimique), on envisage généralement une régénération par détente, par distillation et/ou par entraînement par un gaz vaporisé appelé "gaz de stripage".

D'une manière générale, la mise en œuvre de toutes les solutions absorbantes décrites précédemment impose une consommation énergétique importante pour la régénération de l'agent de séparation. Par exemple, la régénération d'une solution aqueuse d'éthanolamine utilisée pour le captage du CO₂ dans une fumée représente environ 4GJ par tonne de CO₂ captée. Une telle consommation énergétique représente un coût opératoire considérable pour le procédé de captage du CO₂.

La Demanderesse a découvert que l'utilisation d'une composition absorbante particulière, comprenant en milieu aqueux l'association d'une base choisie parmi les carbonates et/ou les hydrogénocarbonates et/ou les hydroxydes avec un composé azolé, permettait d'obtenir des performances intéressantes pour le captage du CO₂ contenu dans un effluent gazeux.

### Résumé de l'invention

L'invention concerne une composition absorbante du dioxyde de carbone contenu dans un effluent gazeux comprenant l'association d'une base B ou un mélange de bases B avec au moins un composé R(NH)ₙ dans un solvant aqueux Z et/ou le produit obtenu par réaction de ladite base B ou dudit mélange de bases B avec ledit composé R(NH)ₙ dans ledit solvant aqueux Z, dans laquelle :
- B est une base ou un mélange de bases répondant à l'une des formules générales M(HCO₃)ₓ ou M'_{y}(CO₃) ou M"(OH)_{w}, où M, M', M" identiques ou différents, sont indifféremment choisis parmi:
- un cation monovalent tel que le lithium, le sodium, le potassium, le rubidium ou le césium,
- un cation ammonium quaternaire répondant à la formule générale R₁R₂R₃R₄N⁺ dans lequel R₁, R₂, R₃ et R₄ sont indépendamment choisis parmi un atome d'hydrogène, un groupe hydrocarboné aliphatique, saturé ou non, ramifié ou non, alicyclique, saturé ou non, substitué ou non, hétérocyclique, saturé ou non, substitué ou non, mono ou polyaromatique substitué ou non renfermant entre 1 et 20 atomes de carbone, R₁, R₂ , R₃ et R₄ pouvant être liés deux à deux par des liaisons covalentes pour former un hétérocycle de 5 à 8 atomes,
- un cation divalent tel que le magnésium, le calcium ou le baryum,
   et dans laquelle x, y, w sont égaux à 1 ou à 2 ;
- R(NH)ₙ est un composé organique hétérocyclique insaturé ou un mélange de composés organiques hétérocycliques insaturés, dans lequel le radical R est un groupe alicyclique, mono ou polyaromatique, ou hétérocyclique possédant au moins un atome d'azote, et n est compris entre 1 et 20, de préférence entre 1 et 6, de manière très préférée n est égal à 2 ou 3.
- Z est essentiellement de l'eau ou un mélange de solvants comprenant de l'eau.

La base B ou le mélange de bases B est choisi parmi les carbonates de lithium, de sodium, de potassium, de césium, de rubidium, de magnésium, de calcium, de baryum, de tétraméthylammonium, de tétraéthylammonium, de benzyltriméthylammonium et de décyltriméthylammonium, les bicarbonates (ou hydrogénocarbonates) de lithium, de sodium, de potassium, de césium et de rubidium, de magnésium, de calcium, de baryum, de tétraméthylammonium, de tétraéthylammonium, de benzyltriméthylammonium, et de décyltriméthylammonium, les hydroxydes de lithium, de sodium, de potassium, de césium et de rubidium, de magnésium, de calcium et de baryum, seuls ou en mélange.

Ledit composé R(NH)ₙ peut être un composé organique hétérocyclique insaturé comprenant au moins 2, 3 ou 4 atomes d'azote dans un cycle de 5 atomes ou plus comprenant respectivement au moins 3, 2 ou 1 atome(s) de carbone, de préférence ledit composé R(NH)ₙ est un composé organique à hétérocycle insaturé à cinq atomes, possédant au moins un atome d'azote pour quatre atomes de carbone.

Ledit radical R peut renfermer un ou plusieurs hétéroatomes présents par l'intermédiaire de fonctions telles que les alcools, éthers, thioéthers, nitriles, cétones, sulfones, sulfoxydes, amides ou amines.

Le composé R(NH)ₙ peut être choisi parmi les azoles tels l'imidazole, le 1,2,4 triazole, le 2 methyl imidazole, le 1,2,3 triazole, le 4 (5) methyl imidazole, le 3-Amino-1,2,4-triazole, le 2-Isopropylimidazole, le 2-Ethyl-4-methylimidazole, le 2 imidazolidone, le 3,5-Diamino-1,2,4-triazole, le L-Histidine, l'adénine, l'acide barbiturique, le Methyl-1H-1,2,4-triazole-3-carboxylate, le 2 ethyl imidazole, le 4-Methyl-5-imidazolecarboxaldehyde, le 2,4-Dimethylimidazole, de manière très préférée choisi parmi l'imidazole, le 1,2,4 triazole, le 2 methyl imidazole, le 1,2,3 triazole, le 4 (5) methyl imidazole, le 3-Amino-1,2,4-triazole.

De manière préférée, le composé R(NH)ₙ est choisi parmi l'imidazole, le 2 methyl imidazole, le 4 (5) methyl imidazole, le 1,2,4 triazole, le 3 amino-1,2,4 triazole.

Dans un mode de réalisation, le solvant Z est essentiellement de l'eau.

Dans un autre mode de réalisation, le solvant Z est de l'eau associée à un autre solvant ou à un mélange de solvants miscibles avec l'eau.

Dans ce cas, l'eau représente au moins 30% en poids, de préférence 50% en poids, de manière très préférée 60% en poids par rapport à la quantité totale de solvant Z.

Ledit autre solvant peut être choisi parmi les glycols, les polyéthylèneglycols, les polypropylèneglycols, les copolymères éthylèneglycol-propylèneglycol, les éthers de glycols, les thioglycols, les thioalcools, les sulfones, les sulfoxydes, les alcools, les urées, les lactames, les pyrrolidones N-alkylées, les pipéridones N-alkylées, les cyclotétraméthylènesulfones, les N-alkylformamides, les N-alkylacétamides, les éther-cétones, les phosphates d'alkyles, les carbonates d'alkylènes, les carbonates de dialkyles et leurs dérivés.

Ledit autre solvant peut notamment être choisi parmi le tétraéthylèneglycoldiméthyléther, le sulfolane, le dimethylsulfoxyde, l'éthanol, le polyéthylèneglycols-200/400/600, la N-méthylpyrrolidone, le 1,3-dioxan-2-one, le diméthylformamide, le diméthylacétamide, le formamide, l'acétamide, la 2-méthoxy-2-méthyl-3-butanone, la 2-méthoxy-2-méthyl-4-pentanone, la tétrahydropyrimidone, le diméthylthiodipropionate, la bis(2-hydroxyéthyl)sulfone ou le tributylphosphate.

Dans la composition absorbante selon l'invention, à chaque mole de B peuvent être associées α moles de R(NH)ₙ, α étant un nombre positif défini pour satisfaire à la condition qu'à une fonction basique apportée par B doit être associée au moins un atome d'hydrogène lié à N dans la formule R(NH)ₙ.

L'invention concerne également un procédé de captage du dioxyde de carbone comprenant une étape de mise en contact de l'effluent gazeux à traiter contenant du CO₂ avec la composition absorbante selon l'une quelconque des variantes précédemment décrites de manière à appauvrir ledit effluent gazeux en CO₂ et à enrichir ledit composition absorbante en CO₂ et une étape de régénération dudit composition absorbante et de génération d'un gaz très riche en CO₂.

La régénération de la composition absorbante enrichie en CO₂ peut se faire par entraînement à la vapeur au moyen d'un gaz entraînant en phase vapeur le dioxyde de carbone ou par chauffage ou par détente ou par une combinaison d'étapes choisies parmi l'entraînement à la vapeur au moyen d'un gaz entraînant en phase vapeur le dioxyde de carbone, la détente et/ou le chauffage.

### Liste des figures

La figure 1 représente la réaction exothermique selon laquelle le CO₂ absorbé réagit avec l'alcanolamine présente dans une solution absorbante selon une réaction exothermique réversible conduisant à la formation de carbamates, d'hydrogénocarbonates ou de carbonates, pour une alcanolamine primaire (1a), secondaire (1b) et tertiaire (1c).
La figure 2 représente le schéma du procédé de captage de CO₂ avec absorption et régénération mettant en œuvre une composition absorbante selon l'invention.

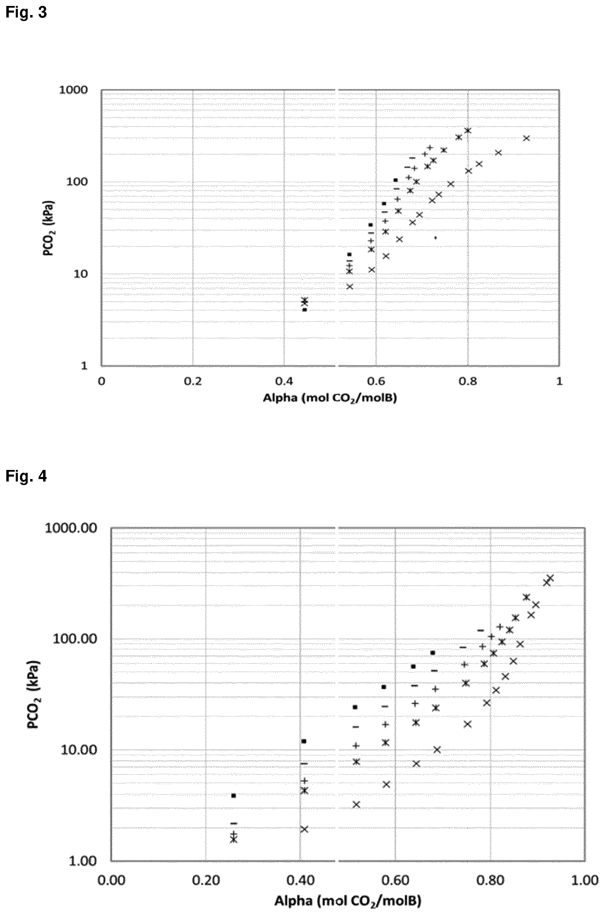

La figure 3 représente la quantité de CO₂ capté par unité de quantité de l'agent captant disponible dans la composition absorbante 1 selon l'invention (imidazole et KOH) en fonction de la pression d'équilibre du système aux températures de mesures (dans l'ordre : croix x 40°C, croix triples 60°C, symboles + 70°C, tirets 80°C et carrés noirs 90°C).
La figure 4 représente la quantité de CO₂ capté par unité de quantité de l'agent captant disponible dans la composition absorbante 2 selon l'invention (1,2,4 triazole et KOH) et illustre le rôle de la température (dans l'ordre comme précédemment : 40°C, 60°C, 70°C, 80°C et 90°C) sur les pressions d'équilibres atteintes et donc sur les quantités de CO₂ captées.

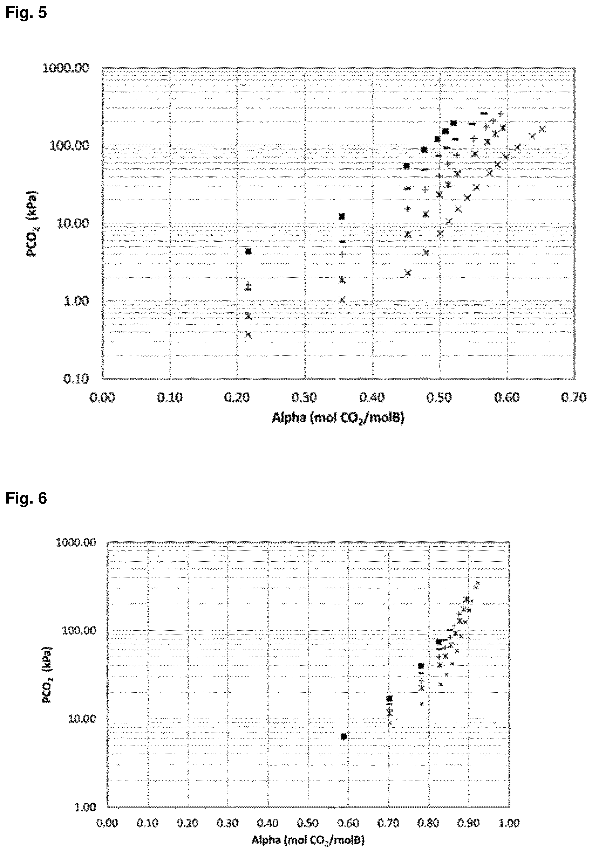

La figure 5 représente la quantité de CO₂ capté par unité de quantité de l'agent captant disponible dans la composition absorbante 3 comparative considérée comme référence pour l'art antérieur (monoethanolamine) en fonction de la pression d'équilibre du système aux températures de mesures (dans l'ordre comme précédemment : 40°C, 60°C, 70°C, 80°C et 90°C).
La figure 6 représente la quantité de CO₂ capté par unité de quantité de l'agent captant disponible dans la composition absorbante 4 comparative (KOH seul) (isothermes d'absorption, dans l'ordre comme précédemment : 40°C, 60°C, 70°C, 80°C et 90°C) sur la plage de pression d'équilibre de CO₂ de l'expérience.

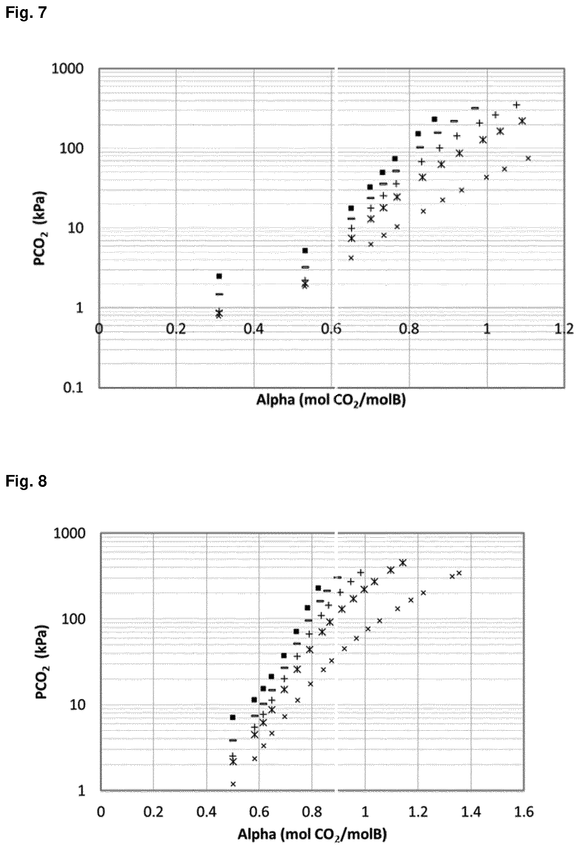

La figure 7 représente la quantité de CO₂ capté par unité de quantité de l'agent captant disponible dans la composition absorbante 5 selon l'invention (2 méthyl imidazole et KOH) et illustre le rôle de la température (dans l'ordre comme précédemment : 40°C, 60°C, 70°C, 80°C et 90°C) sur les pressions d'équilibres atteintes et donc sur les quantités de CO₂ captées.
La figure 8 représente la quantité de CO₂ capté par unité de quantité de l'agent captant disponible dans la composition absorbante 6 selon l'invention (4(5) méthyl imidazole et KOH) en fonction de la pression d'équilibre du système aux températures de mesures (dans l'ordre comme précédemment : 40°C, 60°C, 70°C, 80°C et 90°C).

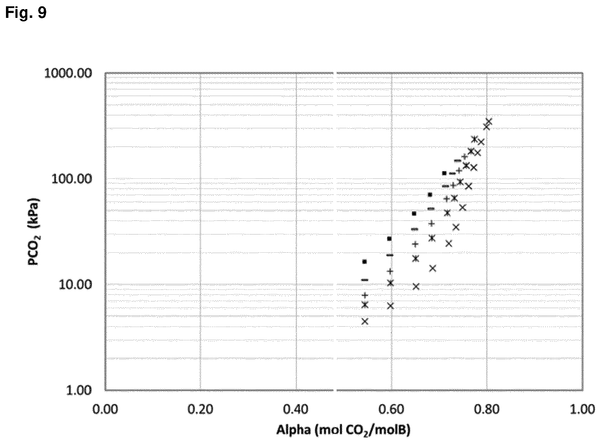

La figure 9 représente la quantité de CO₂ capté par unité de quantité de l'agent captant disponible dans la composition absorbante 7 selon l'invention (3 amino triazole et KOH) et illustre le rôle de la température (dans l'ordre comme précédemment : 40°C, 60°C, 70°C, 80°C et 90°C) sur les pressions d'équilibres atteintes et donc sur les quantités de CO₂ captées.

### Description des modes de réalisation

La présente invention décrit un milieu d'extraction du dioxyde de carbone, plus précisément une composition absorbante utilisée dans un procédé de captage du dioxyde de carbone contenu dans un effluent gazeux, comprenant en milieu aqueux l'association d'une base particulière choisie parmi les carbonates et/ou les hydrogénocarbonates et/ou les hydroxydes avec un composé choisi parmi les composés de type azolés.

Plus particulièrement, la composition absorbante du CO₂ selon l'invention, utilisée dans un procédé de captage du dioxyde de carbone contenu dans un effluent gazeux, comprend l'association d'une base B ou un mélange de bases B de type (hydrogéno)carbonate ou hydroxyde avec au moins un composé R(NH)ₙ dans un solvant aqueux Z et/ou le produit obtenu par réaction de ladite base B ou ledit mélange de bases avec ledit composé R(NH)ₙ dans ledit solvant Z.

De plus, l'invention concerne un procédé de captage du dioxyde de carbone qui consiste à réaliser les étapes suivantes : a) la mise en contact du gaz à traiter contenant du CO₂ avec ladite composition absorbante, de manière à obtenir un gaz appauvri en CO₂ et une composition absorbante riche en CO₂, b) la régénération de la composition absorbante riche en CO₂, pour obtenir une composition absorbante à nouveau utilisable et générer un gaz très riche en CO₂.

La composition absorbante selon la présente invention permet de capter du dioxyde de carbone contenu dans un effluent gazeux. Une fois chargé en dioxyde de carbone, le milieu absorbant peut en outre être régénéré dans des conditions plus aisées que les solutions absorbantes de l'art antérieur.

La composition absorbante du CO₂, selon la présente invention, comprend l'association d'une base B ou un mélange de bases B de type (hydrogéno)carbonate ou hydroxyde répondant à l'une des formules générales M(HCO₃)ₓ ou M'_{y}(CO₃) ou M"(OH)_{w} avec un composé R(NH)ₙ dans un solvant aqueux Z et/ou le produit obtenu par réaction de ladite base ou du mélange de bases avec ledit composé R(NH)ₙ dans ledit solvant Z dans lequel :
- B peut être une base B ou un mélange de bases B de type (hydrogéno)carbonate répondant à l'une des formules générales M(HCO₃)ₓ ou M'_{y}(CO₃), M et M', identiques ou différents, étant indifféremment choisis parmi :
- un cation monovalent tel que le lithium, le sodium, le potassium, le rubidium ou le césium,
- un cation ammonium quaternaire répondant à la formule générale R₁R₂R₃R₄N⁺ R₁, R₂, R₃ et R₄ étant indépendamment choisis parmi un atome d'hydrogène, un groupe hydrocarboné aliphatique, saturé ou non, ramifié ou non, alicyclique, saturé ou non, substitué ou non, hétérocyclique, saturé ou non, substitué ou non, mono ou polyaromatique substitué ou non renfermant entre 1 et 20 atomes de carbone, R₁, R₂ , R₃ et R₄ pouvant être liés deux à deux par des liaisons covalentes pour former un hétérocycle de 5 à 8 atomes,
- un cation divalent tel que le magnésium, le calcium ou le baryum,
   et dans laquelle x et y sont égaux à 1 ou 2;
   et/ou B peut être une base B ou un mélange de bases B de type hydroxyde répondant à la formule générale M"(OH)_{w}, dans laquelle M" est défini de la même façon que M ou M' et w est égal à 1 ou 2.
- R(NH)ₙ est un composé ou un mélange de composés organiques hétérocycliques insaturés, dans lequel le radical R est un groupe alicyclique, mono ou polyaromatique, ou hétérocyclique azoté (c'est-à-dire comprenant au moins un atome d'azote), n étant compris entre 1 et 20
- Le solvant aqueux Z est essentiellement de l'eau, ou un mélange de solvants comprenant de l'eau de manière majoritaire.

Le groupe R est lié à n motifs -NH dans le respect des règles de la chimie organique.

De préférence, le nombre de motifs -NH (n) est compris entre 1 et 6 et de façon très préférée n est égal à 2 ou 3.

Le groupe R peut renfermer un ou plusieurs hétéroatomes présents par l'intermédiaire de fonctions telles que les alcools, éthers, thioéthers, nitriles, cétones, sulfones, sulfoxydes, amides ou amines.

Lorsque (NH) est présent dans un cycle, ce dernier peut comporter des alkyles et/ou des groupements fonctionnels supplémentaires.

Dans un mode de réalisation, R(NH)n est un composé ou un mélange de composés organique(s) hétérocyclique(s) comprenant au moins 2, 3 ou 4 atomes d'azote dans un cycle de 5 atomes ou plus comprenant respectivement au moins 3, 2 ou 1 atome(s) de carbone. De préférence, le composé R(NH)n est un composé organique à hétérocycle insaturé à cinq atomes, possédant au moins un atome d'azote pour quatre atomes de carbone.

R représente de manière très préférée un cycle comprenant 3, 2 ou 1 atome(s) de carbone. Avantageusement, ledit cycle comprend au moins 2 atomes d'azote, voire au moins 3 ou au moins 4 atomes d'azote.

Avantageusement, la composition absorbante selon la présente invention comprend des composants facilement disponibles et simples d'utilisation.

Le fait d'obtenir une composition absorbante performant en milieu aqueux présente plusieurs avantages. En effet, l'eau est un solvant non toxique, peu coûteux et facilement disponible.

De plus, avec l'eau, il est possible de s'affranchir des opérations de purification du gaz très souvent nécessaires par exemple lorsque le solvant est un composé organique comme par exemple le méthanol. En effet, de faibles quantités de solvant sont inévitablement entraînées dans les gaz après séparation du dioxyde de carbone et imposent des étapes supplémentaires et coûteuses de purification.

L'eau présente également l'avantage de ne pas se dégrader contrairement aux molécules organiques généralement utilisées comme solvants.

L'eau présente en outre l'avantage de pouvoir être vaporisée in situ à l'étape de régénération de la composition absorbante enrichi en CO₂. La vapeur d'eau ainsi générée permet de chauffer la composition absorbante et/ou de réaliser le stripage (entraînement à la vapeur) du CO₂.

La base B ou le mélange de bases B de type (hydrogéno)carbonate ou hydroxyde répond à l'une des formules générales M(HCO₃)ₓ ou M'_{y}(CO₃) ou M"(OH)_{w}, dans laquelle M, M', M" identiques ou différents, sont indifféremment choisis parmi :
- un cation monovalent tel que le lithium, le sodium, le potassium, le rubidium ou le césium,
- un cation ammonium quaternaire répondant à la formule générale R₁R₂R₃R₄N⁺ R₁, R₂, R₃ et R₄ étant indépendamment choisis parmi un atome d'hydrogène, un groupe hydrocarboné aliphatique, saturé ou non, ramifié ou non, alicyclique, saturé ou non, substitué ou non, hétérocyclique, saturé ou non, substitué ou non, mono ou polyaromatique substitué ou non renfermant entre 1 et 20 atomes de carbone, R₁, R₂ , R₃ et R₄ pouvant être liés deux à deux par des liaisons covalentes pour former un hétérocycle de 5 à 8 atomes,
- un cation divalent tel que le magnésium, le calcium ou le baryum,
et dans laquelle x, y et w sont indépendamment égaux à 1 ou 2;

Parmi les bases ou mélanges de bases B de type carbonate ou hydrogénocarbonate utilisés dans la composition absorbante selon la présente invention, on pourra citer par exemple, sans être exhaustif : les carbonates de lithium, de sodium, de potassium, de césium et de rubidium, de magnésium, de calcium, de baryum, de tétraméthylammonium, de tétraéthylammonium, de benzyltriméthylammonium, et de décyltriméthylammonium et les bicarbonates (ou hydrogénocarbonates) de lithium, de sodium, de potassium, de césium et de rubidium, de magnésium, de calcium, de baryum, de tétraméthylammonium, de tétraéthylammonium, de benzyltriméthylammonium, et de décyltriméthylammonium, seuls ou en mélange.

Dans ce cas, de façon très préférée, la base B est choisie parmi le carbonate de potassium ou de sodium.

Parmi les bases ou mélanges de bases B de type hydroxyde utilisés dans la composition absorbante selon la présente invention, on pourra citer par exemple, sans être exhaustif : les hydroxydes de lithium, de sodium, de potassium, de césium et de rubidium, de magnésium, de calcium et de baryum, seuls ou en mélange. De manière préférée, la base B est l'hydroxyde de sodium ou de potassium, de manière très préférée, la base B est l'hydroxyde de potassium. Le composé de formule R(NH)ₙ peut être choisi par exemple, sans être exhaustif, parmi les azoles tels l'imidazole, le 1,2,4 triazole, le 2 methyl imidazole, le 1,2,3 triazole, le 4 (5) methyl imidazole, le 3-Amino-1,2,4-triazole, le 2-Isopropylimidazole, le 2-Ethyl-4-methylimidazole, le 2 imidazolidone, le 3,5-Diamino-1,2,4-triazole, le L-Histidine, l'adénine, l'acide barbiturique, le Methyl-1H-1,2,4-triazole-3-carboxylate, le 2 ethyl imidazole, le 4-Methyl-5-imidazolecarboxaldehyde, le 2,4-Dimethylimidazole.

De façon préférée, le composé R(NH)ₙ peut être choisi parmi l'imidazole, le 1,2,4 triazole, le 2 methyl imidazole, le 1,2,3 triazole, le 4 (5) methyl imidazole, le 3-Amino-1,2,4-triazole.

De manière très préférée, le composé R(NH)n est l'imidazole ou le 1,2,4 triazole ou le 2 methyl imidazole ou le 4 (5) methyl imidazole ou le 3-Amino-1,2,4-triazole, car ces composés permettent un bon compromis entre le taux de charge et l'enthalpie d'absorption.

De manière encore plus préférée, le composé R(NH)ₙ peut être choisi parmi l'imidazole, le 2 methyl imidazole, le 4 (5) methyl imidazole.

Le solvant Z peut être essentiellement de l'eau. On entend par "essentiellement " au sens de la présente invention, le fait que dans ce cas le solvant est uniquement constitué d'eau, sans toutefois exclure de l'invention, la possibilité d'avoir également certaines impuretés inhérentes qui pourraient être comprises dans l'eau.

Le solvant Z peut alternativement être un mélange de solvants comprenant de l'eau.

De façon préférée, dans le cas où le solvant Z est constitué d'un mélange de solvants, l'eau demeure le constituant principal. Préférentiellement, selon le nombre de constituants du solvant Z, l'eau peut être ainsi présente à une teneur d'au moins 30% en poids par rapport à la quantité totale de solvant. De façon très préférée, le mélange de solvants peut comprendre au moins 50% poids d'eau, et encore très préférentiellement au moins 60% poids d'eau. Dans ce cas, le solvant est de l'eau associée à un autre solvant ou à un mélange de solvants miscibles avec l'eau. Ces solvants sont choisis parmi les glycols, les polyéthylèneglycols, les polypropylèneglycols, les copolymères éthylèneglycol-propylèneglycol, les éthers de glycols, les thioglycols, les thioalcools, les sulfones, les sulfoxydes, les alcools, les urées, les lactames, les pyrrolidones N-alkylées, les pipéridones N-alkylées, les cyclotétraméthylènesulfones, les N-alkylformamides, les N-alkylacétamides, les éther-cétones, les phosphates d'alkyles, les carbonates d'alkylènes, les carbonates de dialkyles et leurs dérivés.

A titre d'exemple et de façon non limitative, on pourra citer sans être exhaustif le tétraéthylèneglycoldiméthyléther, le sulfolane, le dimethylsulfoxyde, l'éthanol, le polyéthylèneglycols-200/400/600, la N-méthylpyrrolidone, le 1,3-dioxan-2-one, le diméthylformamide, le diméthylacétamide, le formamide, l'acétamide, la 2-méthoxy-2-méthyl-3-butanone, la 2-méthoxy-2-méthyl-4-pentanone, la tétrahydropyrimidone, le diméthylthiodipropionate, la bis(2-hydroxyéthyl)sulfone ou le tributylphosphate.

De façon générale, la composition absorbante peut contenir de 1 à 90% poids d'eau, de préférence de 20 à 80% poids d'eau, de manière plus préférée au moins 50% d'eau.

On a découvert que l'association judicieuse, de par leur nature et de par leur proportion, des deux espèces sous la forme [B + α R(NH)ₙ] en milieu aqueux noté [B + α R(NH)ₙ]_{aq} constitue une composition absorbante intéressante pour le dioxyde de carbone. À chaque mole de B sont associées α moles de R(NH)ₙ et l'espèce ainsi formée possède la propriété de réagir avec CO₂ en milieu aqueux selon le schéma général :

**Chem 1** [B + α R(NH)ₙ]_{aq} + γ CO₂ ⇒ [B, α R(NH)n, γ (CO₂)]_{aq}

dans lequel γ représente le nombre de moles de CO₂ chimiquement associées à l'espèce réactive contenue dans la composition absorbante [B + α R(NH)ₙ]_{aq}.

La valeur du coefficient α dépend de la nature des deux espèces chimiques mises en jeu. α est un nombre positif. De préférence, α doit satisfaire à la condition qu'à une fonction basique apportée par B doit être associée au moins un atome d'hydrogène lié à N dans la formule R(NH)ₙ. Par exemple, dans le cas d'une monobase B = M"OH associée à un composé RNH, α est de préférence supérieur ou égal à 1.

De la sorte, le gaz contenant du CO₂ à traiter après contact avec la composition absorbante sera appauvri en CO₂.

Le dioxyde de carbone peut être en excès ou en défaut par rapport à [B + α R(NH)ₙ]_{aq}, ce qui signifie qu'après captage de CO₂ la composition absorbante peut contenir, en plus du produit de captage du CO₂ [B, α R(NH)ₙ, γ (CO₂)]_{aq}, une quantité de CO₂ en excès ou une quantité de [B + α R(NH)ₙ]_{aq} en excès.

Cette réaction est réversible. La réaction inverse peut être représentée par le schéma général :

**Chem 2** [B, α R(NH)ₙ, γ (CO₂)]_{aq} ⇒ [B + α R(NH)ₙ]_{aq} + γ CO₂

Ainsi, sur la composition absorbante, on procède à une opération visant à restituer [B + α R(NH)ₙ]_{aq} et CO₂. Cette opération permet de générer un gaz très riche en CO₂ et de régénérer la composition absorbante.

L'opération de régénération de la composition absorbante peut s'effectuer dans des conditions qui nécessitent peu d'énergie et notamment moins d'énergie que l'opération qui serait nécessaire pour régénérer la même quantité de CO₂ lorsque celui-ci est extrait au moyen d'une ou plusieurs amines primaires, secondaires ou tertiaires ou d'une composition d'entre elles conduisant à des carbamates, à des hydrogénocarbonates ou à des carbonates selon les réactions équilibrées présentées précédemment comme connues de l'homme du métier (figure 1) et conventionnellement utilisées pour procéder au captage du CO₂.

De même, cette opération de régénération de la composition absorbante peut s'effectuer dans des conditions qui nécessitent peu d'énergie et notamment moins d'énergie que l'opération qui serait nécessaire pour régénérer la même quantité de CO₂ lorsque celui-ci est extrait au moyen d'une base B utilisée seule en l'absence de R(NH)ₙ en milieu aqueux.

On a remarqué que la seule utilisation de R(NH)ₙ en milieu aqueux ne permettait pas de capter autant de CO₂ présent dans un gaz que le mélange [B + α R(NH)ₙ]_{aq}. En revanche, l'association de la base ou du mélange de bases B et du composé R(NH)ₙ en milieu aqueux selon un choix judicieux et dans des proportions de préférence optimisées permet de mettre en œuvre les étapes d'extraction de CO₂ et de régénération de la composition absorbante selon l'invention.

Le système permettant le captage du CO₂ selon l'invention peut être mis en œuvre dans un procédé de traitement de gaz contenant du CO₂.

Le procédé de captage du dioxyde de carbone comprend schématiquement les étapes suivantes : a) le gaz à traiter contenant du CO₂ est mis au contact d'une composition absorbante, de manière à obtenir un gaz appauvri en CO₂ et une composition absorbante riche en CO₂, b) la composition absorbante riche en CO₂ est régénérée, de manière à obtenir une composition absorbante régénérée et à nouveau utilisable, et à générer un gaz très riche en CO₂.

Plus précisément, comme décrit sur la figure 2, dans un procédé de captage de dioxyde de carbone, le gaz à traiter (1) est introduit dans un contacteur gaz-liquide (A) où il est mis en contact avec une composition absorbante liquide régénérée (10). Il en résulte un gaz traité appauvri en CO₂ (2) et un milieu de séparation riche en CO₂ (11). La composition absorbante riche en CO₂ est introduite dans un dispositif d'échange thermique (E) de sorte à produire une composition absorbante riche en CO₂ réchauffée (12). La chaleur est fournie par le refroidissement de la composition absorbante pauvre en CO₂ chaud (13). Il en résulte aussi un flux de composition absorbante pauvre en CO₂ refroidie (10). Des sources chaudes et froides externes, non représentées, peuvent être utilisées pour adapter la température des flux (10) et (12) aux conditions opératoires respectivement des éléments (A) et (C). La composition absorbante riche en CO₂ réchauffée (12) est introduite dans un équipement de séparation gaz-liquide (C) où le milieu de séparation est régénéré. La force motrice de cette séparation est de la chaleur fournie par une source chaude (20) au moyen d'un dispositif d'échange de chaleur (D). Il en résulte une source chaude refroidie (21). Alternativement, cette source chaude peut être complétée pour tout ou partie par un gaz de stripage, non représenté. La régénération du milieu de séparation produit un milieu de séparation pauvre en CO₂ chaud (13) et un flux gazeux riche en CO₂ (3). Selon le mode de régénération choisi le CO₂ du flux (3) peut être en mélange avec un gaz de stripage. De façon alternative, le flux (3) peut être relié à un dispositif destiné à provoquer la détente du milieu de séparation riche en CO₂ et ainsi constituer pour toute ou partie la force motrice de la régénération. Le flux de séparation pauvre en CO₂ chaud (13) cède sa chaleur dans le dispositif (E) décrit précédemment pour fournir au dispositif (A) un milieu de séparation pauvre en CO₂ refroidi (10) à la température adaptée aux conditions opératoires de (A).

La température au cours de l'étape (A) peut avantageusement être comprise entre 20 et 80°C et de préférence entre 30 et 70°C.

Selon l'invention, la régénération de la composition absorbante selon la réaction :

**Chem 2** [B , α R(NH)ₙ , γ (CO₂)]_{aq} ⇒ [B + α R(NH)ₙ]_{aq} + γ CO₂

peut s'effectuer :
- soit par entrainement à la vapeur (ou stripage) au moyen d'un gaz entraînant en phase vapeur le dioxyde de carbone contenu dans le solvant à régénérer. Le gaz de stripage peut par exemple être formé in situ par vaporisation d'un ou plusieurs composés présents dans la composition absorbante : il peut s'agir d'un des composés définis selon l'invention, mais il peut aussi s'agir d'un composé issu du gaz à traiter qui aurait été absorbé avec le CO₂, comme l'eau par exemple dans le cas d'une fumée. Le gaz de stripage peut aussi être apporté à l'étape de régénération : il peut s'agir par exemple d'azote, de vapeur d'eau ou d'une partie du gaz traité issu de l'étape d'absorption.
- soit par chauffage ;
- soit par détente ;
- soit par différentes associations des trois modes de régénération cités.

### Exemples

Les exemples présentés ci-après illustrent l'intérêt technique de la présente invention sans en limiter la portée. Ils présentent en particulier la capacité d'absorption du CO₂ de différents milieux d'absorption et les énergies d'absorption des espèces d'intérêts des différentes compositions absorbantes dans les conditions de mise en œuvre des exemples.

Les essais d'absorption du CO₂ dans les différents compositions absorbantes sont effectués selon le mode opératoire suivant :
La composition absorbante est constituée d'un mélange de composés. Le mélange est tout d'abord dégazé sous vide, agitation et température contrôlés afin de désorber les gaz résiduels dont le CO₂. Une masse connue de mélange est alors injectée sous atmosphère inerte dans un réacteur fermé, afin d'éviter toute contamination en CO₂ de l'ambiant. Le vide est ensuite réalisé dans le réacteur jusqu'à atteindre la pression de vapeur saturante du mélange à la température d'intérêt.

Ensuite, à 40, 60, 70, 80 et 90°C sont injectés des volumes de CO₂ purs dans le réacteur par décharge de ballast calibré afin d'atteindre les différentes consignes de pression entre 0 et 3 bars définies par un automate. A chaque consigne de pression atteinte dans le réacteur suite à l'injection de CO₂, un palier de 40 min est réalisé afin d'obtenir l'équilibre liquide vapeur. Ainsi, en suivant la pression au sein du réacteur en fonction du temps, pour chaque température est obtenue une série de points, correspondant à la quantité de CO₂ injectée dans le réacteur. Connaissant les volumes du réacteur à vide et le volume du mélange inséré, le volume de la phase gaz peut être calculé, et donc le nombre de moles de CO₂ en phase gaz et celui captée peuvent en être déduits. Lorsque l'étape d'absorption du CO₂ est terminée, le taux de charge est déterminé. Le taux de charge est défini par l'homme de l'art comme étant le nombre de moles de CO₂ captées divisé par le nombre de moles du composé basique (base ou mélange de bases) B présent dans la composition absorbante.

Via la succession d'isothermes entre 40°C et 90°C, il est possible de déterminer l'enthalpie de réaction du CO₂ dans le mélange en fonction du taux de charge alpha en appliquant la relation de Gibbs Helmotz connue de l'homme du métier comme la relation entre la température du mélange, la pression partielle en CO₂ et l'enthalpie de réaction.

En complément, les taux de charges mesurés aux pressions partielles types des proportions retrouvées en sorties de stations émettrices (exemple : centrales charbon avec P_{CO2} = 10 kPa) peuvent être reportées afin d'observer les taux de charges atteignables par les mélanges. Les mélanges suivants ont été évalués :
La composition absorbante 1 (selon l'invention) est obtenue en mélangeant 0,14 mol de KOH avec 0,14 mol d'imidazole et 70 g d'eau.

La composition absorbante 2 (selon l'invention) est obtenue en mélangeant 0,14 mol de KOH avec 0,14 mol de 1,2,4 triazole et 70 g d'eau.

La composition absorbante 3 (comparative) est obtenue en mélangeant 30 g (0,49 mol) de monoéthanolamine (MEA) avec 40 g d'eau. Cette composition absorbante correspond à une solution aqueuse d'éthanolamine (MEA) à 30% poids qui est un solvant de référence bien connu de l'homme de l'art pour le captage du CO₂ dans les fumées.

La composition absorbante 4 (comparative) est obtenue en mélangeant 0,14 mol de KOH et 70 g d'eau. Cette composition absorbante contient une base hydroxyde, mais ne contient pas le composé R(NH)ₙ.

La composition absorbante 5 (selon l'invention) est obtenue en mélangeant 0,14 mol de KOH avec 0,14 mol de 2 methyl imidazole et 70 g d'eau.

La composition absorbante 6 (selon l'invention) est obtenue en mélangeant 0,14 mol de KOH avec 0,14 mol de 4(5) methyl imidazole et 70 g d'eau.

La composition absorbante 7 (selon l'invention) est obtenue en mélangeant 0,14 mol de KOH avec 0,14 mol de 3 amino - 1,2,4 triazole et 70 g d'eau.

Les Figures 3, 4, 5, 6, 7, 8 et 9 présentent les isothermes d'absorption à 40, 60, 70, 80 et 90°C de CO₂ des mélanges 1, 2, 3, 4, 5, 6 et 7.

Comme observé sur les figures 3, 4 et 8 comparativement à la figure 5, les capacités atteintes à l'équilibre aux faibles pressions partielles telles que 5 kPa (40°C) de CO₂ sont supérieures ou au moins égales à celles du composé de l'art antérieur dans la composition absorbante du milieu d'extraction 3. Où [alpha :milieu 1 :5kPa] = 0,48 mol CO₂ /mol B, [alpha :milieu 2 :5kPa] = 0,58 mol CO₂ /mol B et alpha :milieu 7 :5kPa] = 0,56 mol CO2 /mol B contre [alpha :milieu 3 :5kPa] =0,48 mol CO₂ /mol B. Pour 10 kPa de CO₂ et à l'équilibre thermodynamique, les capacités atteintes sont toutes supérieures à celle atteinte par le mélange 3 représentant l'art antérieur (voir tableau 1).

Une attention particulière pourra être apportée aux performances encore plus importantes obtenues, avec les compositions absorbantes des milieux d'extraction 5 et 6, où pour une pression partielle de CO₂ à l'équilibre de faibles pressions de 5 kPa (40°C), les capacités atteintes sont encore plus importantes : [alpha :milieu 5 :5kPa] = 0.67 mol CO₂ /mol B, [alpha :milieu 6 :5kPa] = 0.65 mol CO₂ /mol B et alpha :milieu 7 :5kPa] = 0.56 mol CO₂ /mol B contre [alpha :milieu 3 :5kPa] =0.48 mol CO₂ /mol B.

Le tableau 1 suivant présente pour les différentes compositions absorbantes les enthalpies d'absorption selon un même taux de charge pour comparaison et le taux de charge en CO₂ après absorption sous 10 kPa à 40°C.

**Table 1**

| | Taux de charge (mol CO₂/ mol B) | Enthalpie d'absorption (kJ/mol) |
|---|---|---|
| Composition absorbante du CO₂ | P_{CO2} = 10kPa | alpha =0,5 |
| 1 (selon l'invention) | 0,59 | 16 |
| 2 (selon l'invention) | 0,69 | 39 |
| 3 (comparatif) | 0,51 | 70 |
| 4 (comparatif) | 0,70 | 100 |
| 5 (selon l'invention) | 0,70 | 34 |
| 6 (selon l'invention) | 0,74 | 34 |
| 7 (selon l'invention) | 0,65 | 27 |

Ces exemples montrent que les compositions absorbantes 1 et 2 ainsi que 5, 6 et 7 selon l'invention captent plus de CO₂ et sont régénérées plus facilement que la composition absorbante 3 selon l'art antérieur, en raison d'une plus faible enthalpie d'absorption du CO₂. La régénération est d'autant facilitée par rapport au mélange 4 ne comportant pas le composé R(NH)ₙ.

De plus, la comparaison des résultats de la composition absorbante 4 avec les compositions absorbantes 1, 2, 5, 6 et 7 selon l'invention, montre clairement que c'est l'association du composé R(NH)ₙ avec le composé B en milieu aqueux selon l'invention qui permet une régénération facilitée de la composition absorbante pour des quantités équivalentes de CO₂ absorbé, et non pas le composé B utilisé seul en solution dans l'eau.

## Revendications

1. Composition absorbante du dioxyde de carbone contenu dans un effluent gazeux comprenant l'association d'une base B ou un mélange de bases B avec au moins un composé R(NH)ₙ dans un solvant aqueux Z et/ou le produit obtenu par réaction de ladite base B ou dudit mélange de bases B avec ledit composé R(NH)ₙ dans ledit solvant aqueux Z, dans laquelle :
- B est une base ou un mélange de bases répondant à l'une des formules générales M(HCO₃)ₓ ou M'_{y}(CO₃) ou M"(OH)_{w}, où M, M', M" identiques ou différents, sont indifféremment choisis parmi:
- un cation monovalent choisi parmi le lithium, le sodium, le potassium, le rubidium ou le césium,
- un cation ammonium quaternaire répondant à la formule générale R₁R₂R₃R₄N⁺ dans lequel R₁, R₂, R₃ et R₄ sont indépendamment choisis parmi un atome d'hydrogène, un groupe hydrocarboné aliphatique, saturé ou non, ramifié ou non, alicyclique, saturé ou non, substitué ou non, hétérocyclique, saturé ou non, substitué ou non, mono ou polyaromatique substitué ou non renfermant entre 1 et 20 atomes de carbone, R₁, R₂ , R₃ et R₄ pouvant être liés deux à deux par des liaisons covalentes pour former un hétérocycle de 5 à 8 atomes,
- un cation divalent tel que le magnésium, le calcium ou le baryum,
et dans laquelle x, y, w sont égaux à 1 ou à 2 ;
- R(NH)ₙ est un composé organique hétérocyclique insaturé ou un mélange de composés organiques hétérocycliques insaturés, dans lequel/lesquels le composé R(NH)n est un composé organique hétérocyclique insaturé comprenant au moins 2, 3 ou 4 atomes d'azote dans un cycle de 5 atomes ou plus comprenant respectivement au moins 3, 2 ou 1 atome(s) de carbone, et dans lequel le radical R est un groupe alicyclique, mono ou polyaromatique, ou hétérocyclique possédant au moins un atome d'azote, et n est compris entre 1 et 20, de préférence entre 1 et 6, de manière très préférée n est égal à 2 ou 3.
- Z est uniquement constitué d'eau ou est un mélange de solvants comprenant de l'eau.

2. Composition absorbante du dioxyde de carbone selon la revendication 1 dans laquelle la base B ou le mélange de bases B est choisi parmi les carbonates de lithium, de sodium, de potassium, de césium, de rubidium, de magnésium, de calcium, de baryum, de tétraméthylammonium, de tétraéthylammonium, de benzyltriméthylammonium et de décyltriméthylammonium, les bicarbonates (ou hydrogénocarbonates) de lithium, de sodium, de potassium, de césium et de rubidium, de magnésium, de calcium, de baryum, de tétraméthylammonium, de tétraéthylammonium, de benzyltriméthylammonium, et de décyltriméthylammonium, les hydroxydes de lithium, de sodium, de potassium, de césium et de rubidium, de magnésium, de calcium et de baryum, seuls ou en mélange.

3. Composition absorbante du dioxyde de carbone selon l'une des revendications 1 ou 2 dans laquelle le composé R(NH)n est un composé organique à hétérocycle insaturé à cinq atomes, possédant au moins un atome d'azote pour quatre atomes de carbone.

4. Composition absorbante du dioxyde de carbone selon l'une des revendications précédentes dans laquelle ledit radical R renferme un ou plusieurs hétéroatomes présents par l'intermédiaire de fonctions alcools, éthers, thioéthers, nitriles, cétones, sulfones, sulfoxydes, amides ou amines.

5. Composition absorbante du dioxyde de carbone selon l'une des revendications précédentes dans laquelle le composé R(NH)ₙ est choisi parmi les azoles tels l'imidazole, le 1,2,4 triazole, le 2 methyl imidazole, le 1,2,3 triazole, le 4 (5) methyl imidazole, le 3-Amino-1,2,4-triazole, le 2-Isopropylimidazole, le 2-Ethyl-4-methylimidazole, le 2 imidazolidone, le 3,5-Diamino-1,2,4-triazole, le L-Histidine, l'adénine, l'acide barbiturique, le Methyl-1H-1,2,4-triazole-3-carboxylate, le 2 ethyl imidazole, le 4-Methyl-5-imidazolecarboxaldehyde, le 2,4-Dimethylimidazole, de manière très préférée choisi parmi l'imidazole, le 1,2,4 triazole, le 2 methyl imidazole, le 1,2,3 triazole, le 4 (5) methyl imidazole, le 3-Amino-1,2,4-triazole.

6. Composition absorbante du dioxyde de carbone selon la revendication 5 dans laquelle le composé R(NH)ₙ est choisi parmi l'imidazole, le 2 methyl imidazole, le 4 (5) methyl imidazole, le 1,2,4 triazole, le 3 amino-1,2,4 triazole.

7. Composition absorbante du dioxyde de carbone selon l'une des revendications précédentes dans laquelle le solvant Z est uniquement constitué d'eau.

8. Composition absorbante du dioxyde de carbone selon l'une des revendications 1 à 6 dans laquelle le solvant Z est de l'eau associée à un autre solvant ou à un mélange de solvants miscibles avec l'eau.

9. Composition absorbante du dioxyde de carbone selon la revendication 8 dans lequel l'eau représente au moins 30% en poids, de préférence 50% en poids, de manière très préférée 60% en poids par rapport à la quantité totale de solvant Z.

10. Composition absorbante du dioxyde de carbone selon l'une des revendications 8 ou 9 dans lequel ledit autre solvant est choisi parmi les glycols, les polyéthylèneglycols, les polypropylèneglycols, les copolymères éthylèneglycol-propylèneglycol, les éthers de glycols, les thioglycols, les thioalcools, les sulfones, les sulfoxydes, les alcools, les urées, les lactames, les pyrrolidones N-alkylées, les pipéridones N-alkylées, les cyclotétraméthylènesulfones, les N-alkylformamides, les N-alkylacétamides, les éther-cétones, les phosphates d'alkyles, les carbonates d'alkylènes, les carbonates de dialkyles et leurs dérivés.

11. Composition absorbante du dioxyde de carbone selon l'une des revendications 8 ou 9 dans lequel ledit autre solvant est choisi parmi le tétraéthylèneglycoldiméthyléther, le sulfolane, le dimethylsulfoxyde, l'éthanol, le polyéthylèneglycols-200/400/600, la N-méthylpyrrolidone, le 1,3-dioxan-2-one, le diméthylformamide, le diméthylacétamide, le formamide, l'acétamide, la 2-méthoxy-2-méthyl-3-butanone, la 2-méthoxy-2-méthyl-4-pentanone, la tétrahydropyrimidone, le diméthylthiodipropionate, la bis(2-hydroxyéthyl)sulfone ou le tributylphosphate.

12. Composition absorbante du dioxyde de carbone selon l'une des revendications précédentes dans laquelle à chaque mole de B sont associées α moles de R(NH)ₙ, α étant un nombre positif défini pour satisfaire à la condition qu'à une fonction basique apportée par B doit être associée au moins un atome d'hydrogène lié à N dans la formule R(NH)ₙ.

13. Procédé de captage du dioxyde de carbone comprenant une étape de mise en contact de l'effluent gazeux à traiter contenant du CO₂ avec la composition absorbante selon l'une quelconque des revendications 1 à 12 de manière à appauvrir ledit effluent gazeux en CO₂ et à enrichir ledit composition absorbante en CO₂ et une étape de régénération de ladite composition absorbante et de génération d'un gaz très riche en CO₂.

14. Procédé selon la revendication 13 **caractérisé en ce que** la régénération de la composition absorbante enrichie en CO₂ se fait par entraînement à la vapeur au moyen d'un gaz entraînant en phase vapeur le dioxyde de carbone ou par chauffage ou par détente ou par une combinaison d'étapes choisies parmi l'entraînement à la vapeur au moyen d'un gaz entraînant en phase vapeur le dioxyde de carbone, la détente et/ou le chauffage.

## Patentansprüche

1. Zusammensetzung, die in einem gasförmigen Abstrom enthaltenes Kohlendioxid absorbiert, umfassend die Kombination einer Base B oder eines Gemisches von Basen B mit mindestens einer Verbindung R(NH)ₙ in einem wässrigen Lösungsmittel Z und/oder das Produkt, das durch Reaktion der Base B oder des Gemisches von Basen B mit der Verbindung R(NH)ₙ in dem wässrigen Lösungsmittel Z erhalten wird, wobei:
- B eine Base oder ein Gemisch von Basen ist, die bzw. das eine der allgemeinen Formeln M(HCO₃)ₓ oder M'_{y}(CO₃) oder M"(Oh)w_{w} erfüllen, wobei M, M', M", die gleich oder verschieden sind, unterschiedslos gewählt sind aus:
- einem einwertigen Kation, das aus Lithium, Natrium, Kalium, Rubidium oder Cäsium gewählt ist,
- einem vierwertigen Ammonium-Kation, das die allgemeine Formel R₁R₂R₃R₄N⁺ erfüllt, in der R₁, R₂, R₃ und R₄ unabhängig aus einem Wasserstoffatom, einer aliphatischen, gesättigten oder ungesättigten, verzweigten oder unverzweigten, alizyklischen, gesättigten oder ungesättigten, substituierten oder unsubstituierten, heterozyklischen, gesättigten oder ungesättigten, substituierten oder unsubstituierten, mono- oder polyaromatischen, substituierten oder unsubstituierten Kohlenwasserstoffgruppe gewählt sind, die zwischen 1 und 20 Kohlenstoffatome umfasst, wobei R₁, R₂ , R₃ und R₄ paarweise durch kovalente Bindungen gebunden sein können, um einen Heterozyklus mit 5 bis 8 Atomen zu bilden,
- einem zweiwertigen Kation wie Magnesium, Calcium oder Barium,
und worin x, y, w gleich 1 oder 2 sind;
- R(NH)ₙ eine ungesättigte heterozyklische organische Verbindung oder ein Gemisch aus ungesättigten heterozyklischen organischen Verbindungen ist, in der/denen die Verbindung R(NH)n eine ungesättigte heterozyklische organische Verbindung ist, die mindestens 2, 3 oder 4 Stickstoffatome in einem Ring aus 5 Atomen oder mehr umfasst, der mindestens 3, 2 beziehungsweise 1 Kohlenstoffatom(e) umfasst, und in welcher der Rest R eine alizyklische, mono- oder polyaromatische oder heterozyklische Gruppe ist, die mindestens ein Stickstoffatom besitzt, und n zwischen 1 und 20, bevorzugt zwischen 1 und 6, liegt, wobei n besonders bevorzugt gleich 2 oder 3 ist.
- Z nur aus Wasser besteht oder ein Wasser umfassendes Gemisch von Lösungsmitteln ist.

2. Kohlendioxid absorbierende Zusammensetzung nach Anspruch 1, wobei die Base B oder das Gemisch von Basen B aus den Carbonaten von Lithium, Natrium, Kalium, Cäsium, Rubidium, Magnesium, Calcium, Barium, Tetramethylammonium, Tetraethylammonium, Benzyltrimethylammonium und Decyltrimethylammonium, den Bicarbonaten (oder Hydrogencarbonaten) von Lithium, Natrium, Kalium, Cäsium und Rubidium, Magnesium, Calcium, Barium, Tetramethylammonium, Tetraethylammonium, Benzyltrimethylammonium und Decyltrimethylammonium, den Hydroxiden von Lithium, Natrium, Kalium, Cäsium und Rubidium, Magnesium, Calcium und Barium, allein oder gemischt, gewählt ist.

3. Kohlendioxid absorbierende Zusammensetzung nach einem der Ansprüche 1 oder 2, wobei die Verbindung R(NH)n eine organische Verbindung mit ungesättigtem Heterozyklus mit fünf Atomen ist, die mindestens ein Stickstoffatom für je vier Kohlenstoffatome besitzt.

4. Kohlendioxid absorbierende Zusammensetzung nach einem der vorhergehenden Ansprüche, wobei der Rest R ein oder mehrere Heteroatome umfasst, die über Alkohol-, Ether-, Thioether-, Nitril-, Keton-, Sulfon-, Sulfoxid-, Amid- oder Aminfunktionen vorhanden sind.

5. Kohlendioxid absorbierende Zusammensetzung nach einem der vorhergehenden Ansprüche, wobei die Verbindung R(NH)ₙ aus den Azolen wie Imidazol, 1,2,4-Triazol, 2-Methylimidazol, 1,2,3-Triazol, 4(5)-Methylimidazol, 3-Amino-1,2,4-triazol, 2-Isopropylimidazol, 2-Ethyl-4-methylimidazol, 2-Imidazolidon, 3,5-Diamino-1,2,4-triazol, L-Histidin, Adenin, Barbitursäure, Methyl-1H-1,2,4-triazol-3-carboxylat, 2-Ethylimidazol, 4-Methyl-5-imidazolcarboxaldehyd, 2,4-Dimethylimidazol gewählt ist, besonders bevorzugt aus Imidazol, 1,2,4-Triazol, 2-Methylimidazol, 1,2,3-Triazol, 4(5)-Methylimidazol, 3-Amino-1,2,4-triazol gewählt ist.

6. Kohlendioxid absorbierende Zusammensetzung nach Anspruch 5, wobei die Verbindung R(NH)ₙ aus Imidazol, 2-Methylimidazol, 4(5)-Methylimidazol, 1,2,4-Triazol, 3-Amino-1,2,4-triazol gewählt ist.

7. Kohlendioxid absorbierende Zusammensetzung nach einem der vorhergehenden Ansprüche, wobei das Lösungsmittel Z nur aus Wasser besteht.

8. Kohlendioxid absorbierende Zusammensetzung nach einem der Ansprüche 1 bis 6, wobei das Lösungsmittel Z Wasser ist, das mit einem anderen Lösungsmittel oder mit einem Gemisch aus mit Wasser mischbaren Lösungsmitteln kombiniert ist.

9. Kohlendioxid absorbierende Zusammensetzung nach Anspruch 8, wobei das Wasser mindestens 30 Gew.-%, bevorzugt 50 Gew.-%, besonders bevorzugt 60 Gew.-%, bezogen auf die Gesamtmenge des Lösungsmittels Z ausmacht.

10. Kohlendioxid absorbierende Zusammensetzung nach einem der Ansprüche 8 oder 9, wobei das andere Lösungsmittel aus den Glykolen, den Polyethyleneglykolen, den Polypropylenglykolen, den Ethylenglykol-Propylenglykol-Copolymeren, den Glykolethern, den Thioglykolen, den Thioalkoholen, den Sulfonen, den Sulfoxiden, den Alkoholen, den Harnstoffen, den Lactamen, den N-alkylierten Pyrrolidonen, den N-alkylierten Piperidonen, den Cyclotetramethylensulfonen, den N-Alkylformamiden, den N-Alkylacetamiden, den Etherketonen, den Alkylphosphaten, den Alkylencarbonaten, den Dialkylcarbonaten und ihren Derivaten gewählt ist.

11. Kohlendioxid absorbierende Zusammensetzung nach einem der Ansprüche 8 oder 9, wobei das andere Lösungsmittel aus Tetraethylenglykoldimethylether, Sulfolan, Dimethylsulfoxid, Ethanol, Polyethylenglykol-200/400/600, N-Methylpyrrolidon, 1,3-Dioxan-2-on, Dimethylformamid, Dimethylacetamid, Formamid, Acetamid, 2-Methoxy-2-methyl-3-butanon, 2-Methoxy-2-methyl-4-pentanon, Tetrahydropyrimidon, Dimethylthiodipropionat, Bis(2-hydroxyethyl)sulfon oder Tributylphosphat gewählt ist.

12. Kohlendioxid absorbierende Zusammensetzung nach einem der vorhergehenden Ansprüche, wobei mit jedem Mol von B α Mole von R(NH)ₙ kombiniert sind, wobei α eine positive Zahl ist, die so festgelegt ist, dass die Bedingung erfüllt ist, dass mit einer von B eingebrachten basischen Funktion mindestens ein an N gebundenes Wasserstoffatom in der Formel R(NH)ₙ kombiniert sein muss.

13. Verfahren zum Abscheiden von Kohlendioxid, umfassend einen Schritt des Kontaktierens des CO₂ enthaltenden zu behandelnden gasförmigen Abstroms mit der absorbierenden Zusammensetzung nach einem der Ansprüche 1 bis 12, so dass der gasförmige Abstrom an CO₂ abgereichert und die absorbierende Zusammensetzung an CO₂ angereichert wird, und einen Schritt zur Regeneration der absorbierenden Zusammensetzung und zur Erzeugung eines an CO₂ sehr reichen Gases.

14. Verfahren nach Anspruch 13, **dadurch gekennzeichnet, dass** die Regeneration der an CO₂ angereicherten absorbierenden Zusammensetzung durch Dampfdestillation mittels eines das Kohlendioxid in der Dampfphase mitführenden Gases oder durch Erhitzen oder durch Entspannen oder durch eine Kombination von Schritten, die aus der Dampfdestillation mittels eines das Kohlendioxid in der Dampfphase mitführenden Gases, dem Entspannen und/oder dem Erhitzen gewählt sind, erfolgt.

## Claims

1. Absorbent composition for absorbing the carbon dioxide contained in a gaseous effluent comprising the combination of a base B or a mixture of bases B with at least one compound R(NH)ₙ in an aqueous solvent Z and/or the product obtained by reaction of said base B or of said mixture of bases B with said compound R(NH)ₙ in said aqueous solvent Z, in which:
- B is a base or a mixture of bases corresponding to one of the general formulae M(HCO₃)ₓ or M'_{y}(CO₃) or M"(OH)_{w}, where M, M', M", which are identical or different, are chosen without distinction from:
- a monovalent cation chosen from lithium, sodium, potassium, rubidium or caesium,
- a quaternary ammonium cation corresponding to the general formula R₁R₂R₃R₄N⁺ in which R₁, R₂, R₃ and R₄ are independently chosen from a hydrogen atom, a branched or unbranched, saturated or unsaturated aliphatic, substituted or unsubstituted, saturated or unsaturated alicyclic, substituted or unsubstituted, saturated or unsaturated heterocyclic, substituted or unsubstituted monoaromatic or polyaromatic hydrocarbon-based group containing between 1 and 20 carbon atoms, it being possible for R₁, R₂, R₃ and R₄ to be bonded in pairs by covalent bonds to form a heterocycle with 5 to 8 atoms,
- a divalent cation such as magnesium, calcium or barium,
and in which x, y, w are equal to 1 or to 2;
- R(NH)ₙ is an unsaturated heterocyclic organic compound or a mixture of unsaturated heterocyclic organic compounds, in which the compound R(NH)ₙ is an unsaturated heterocyclic organic compound comprising at least 2, 3 or 4 nitrogen atoms in a ring of 5 or more atoms respectively comprising at least 3, 2 or 1 carbon atom(s), and in which the radical R is an alicyclic, monoaromatic or polyaromatic, or heterocyclic group having at least one nitrogen atom, and n is between 1 and 20, preferably between 1 and 6, very preferably n is equal to 2 or 3;
- Z consists solely of water or is a mixture of solvents comprising water.

2. Absorbent composition for absorbing carbon dioxide according to Claim 1, in which the base B or the mixture of bases B is chosen from the carbonates of lithium, sodium, potassium, caesium, rubidium, magnesium, calcium, barium, tetramethylammonium, tetraethylammonium, benzyltrimethylammonium and decyltrimethylammonium, the bicarbonates (or hydrogen carbonates) of lithium, sodium, potassium, caesium and rubidium, magnesium, calcium, barium, tetramethylammonium, tetraethylammonium, benzyltrimethylammonium and decyltrimethylammonium, the hydroxides of lithium, sodium, potassium, caesium and rubidium, magnesium, calcium and barium, alone or as a mixture.

3. Absorbent composition for absorbing carbon dioxide according to either of Claims 1 and 2, in which the compound R(NH)ₙ is an organic compound with an unsaturated heterocycle containing five atoms, having at least one nitrogen atom per four carbon atoms.

4. Absorbent composition for absorbing carbon dioxide according to one of the preceding claims, in which said radical R contains one or more heteroatoms, present by means of alcohol, ether, thioether, nitrile, ketone, sulfone, sulfoxide, amide or amine functions.

5. Absorbent composition for absorbing carbon dioxide according to one of the preceding claims, in which the compound R(NH)ₙ is chosen from azoles such as imidazole, 1,2,4-triazole, 2-methylimidazole, 1,2,3-triazole, 4(5)-methylimidazole, 3-amino-1,2,4-triazole, 2-isopropylimidazole, 2-ethyl-4-methylimidazole, 2-imidazolidone, 3,5-diamino-1,2,4-triazole, L-histidine, adenine, barbituric acid, methyl-1H-1,2,4-triazole-3-carboxylate, 2-ethylimidazole, 4-methyl-5-imidazolecarboxaldehyde and 2,4-dimethylimidazole, very preferably chosen from imidazole, 1,2,4-triazole, 2-methylimidazole, 1,2,3-triazole, 4(5)-methylimidazole and 3-amino-1,2,4-triazole.

6. Absorbent composition for absorbing carbon dioxide according to Claim 5, in which the compound R(NH)ₙ is chosen from imidazole, 2-methylimidazole, 4(5)-methylimidazole, 1,2,4-triazole and 3-amino-1,2,4 triazole.

7. Absorbent composition for absorbing carbon dioxide according to one of the preceding claims, in which the solvent Z consists solely of water.

8. Absorbent composition for absorbing carbon dioxide according to one of Claims 1 to 6, in which the solvent Z is water combined with another solvent or with a mixture of solvents that is/are miscible with water.

9. Absorbent composition for absorbing carbon dioxide according to Claim 8, in which the water represents at least 30% by weight, preferably 50% by weight, very preferably 60% by weight relative to the total amount of solvent Z.

10. Absorbent composition for absorbing carbon dioxide according to either of Claims 8 and 9, in which said other solvent is chosen from glycols, polyethylene glycols, polypropylene glycols, ethylene glycol-propylene glycol copolymers, glycol ethers, thioglycols, thioalcohols, sulfones, sulfoxides, alcohols, ureas, lactams, N-alkyl pyrrolidones, N-alkyl piperidones, cyclotetramethylene sulfones, N-alkylformamides, N-alkylacetamides, etherketones, alkyl phosphates, alkylene carbonates, dialkyl carbonates and derivatives thereof.

11. Absorbent composition for absorbing carbon dioxide according to either of Claims 8 and 9, in which said other solvent is chosen from tetraethylene glycol dimethyl ether, sulfolane, dimethyl sulfoxide, ethanol, polyethylene glycols-200/400/600, N-methylpyrrolidone, 1,3-dioxan-2-one, dimethylformamide, dimethylacetamide, formamide, acetamide, 2-methoxy-2-methyl-3-butanone, 2-methoxy-2-methyl-4-pentanone, tetrahydropyrimidone, dimethyl thiodipropionate, bis(2-hydroxyethyl)sulfone or tributyl phosphate.

12. Absorbent composition for absorbing carbon dioxide according to one of the preceding claims, in which α moles of R(NH)ₙ are combined with each mole of B, α being a positive number defined in order to satisfy the condition that at least one hydrogen atom bonded to N in the formula R(NH)ₙ must be combined with a basic function provided by B.

13. Process for capturing carbon dioxide comprising a step of bringing the CO₂-containing gaseous effluent to be treated into contact with the absorbent composition according to any one of Claims 1 to 12 so as to deplete said gaseous effluent of CO₂ and to enrich said absorbent composition in CO₂ and a step of regenerating said absorbent composition and of generating a gas very rich in CO₂.

14. Process according to Claim 13, **characterized in that** the regeneration of the absorbent composition enriched in CO₂ is carried out by steam entrainment by means of a gas that entrains the carbon dioxide in the vapour phase or by heating or by expansion or by a combination of steps chosen from steam entrainment by means of a gas that entrains the carbon dioxide in the vapour phase, expansion and/or heating.
